(19) Europäisches Patentamt
European Patent Office
Office européen des brevets

(11) **EP 2 276 918 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **09730224.4**

(22) Anmeldetag: **19.03.2009**

(51) Int Cl.:
*F02D 41/00* *(2006.01)*      *B60W 10/06* *(2006.01)*

(86) Internationale Anmeldenummer:
**PCT/EP2009/053268**

(87) Internationale Veröffentlichungsnummer:
**WO 2009/124831 (15.10.2009 Gazette 2009/42)**

(54) **ADAPTION EINES STATIONÄREN MAXIMALMOMENTS EINER BRENNKRAFTMASCHINE**

ADAPTION OF A STATIONARY MAXIMUM TORQUE OF AN INTERNAL COMBUSTION ENGINE

ADAPTATION D'UN MOMENT MAXIMAL STATIONNAIRE D'UN MOTEUR À COMBUSTION INTERNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **11.04.2008 DE 102008001128**

(43) Veröffentlichungstag der Anmeldung:
**26.01.2011 Patentblatt 2011/04**

(73) Patentinhaber: **Robert Bosch GmbH**
**70442 Stuttgart (DE)**

(72) Erfinder:
• **FALKENSTEIN, Jens-Werner**
**73434 Aalen (DE)**
• **LANG, Martin**
**A-3464 Hausleiten (AT)**

(56) Entgegenhaltungen:
**DE-A1- 19 548 722      DE-A1-102004 038 810**
**DE-C1- 19 630 213**

**Beschreibung**

Die Erfindung betrifft ein Verfahren zum Betreiben einer Brennkraftmaschine für die ein stationäres Maximalmoment und ein dynamisches Maximalmoment ermittelt wird. Ferner betrifft die Erfindung eine entsprechende Vorrichtung.

Stand der Technik

Die Ermittlung eines stationären Maximalmoments und eines dynamischen Maximalmoments für eine Brennkraftmaschine sind bekannt. Das stationäre Maximalmoment hängt weitestgehend von einer aktuellen Drehzahl der Brennkraftmaschine und der bei dieser Drehzahl möglichen maximalen Füllung von Luft oder Luft-Kraftstoffgemisch in den Brennkammern einer Brennkraftmaschine ab. Da die maximale Füllung in vielen Betriebszuständen der Brennkraftmaschine nicht vorliegt und bei Bedarf erst aufgebaut werden muss, lässt sich ein erzeugtes Ist-Drehmoment bis auf das stationäre Maximalmoment nur mit einer Verzögerung erhöhen, die insbesondere von einer Luftpfaddynamik einer Luft- beziehungsweise Gemischzufuhr und/oder von einer Turboladerdynamik eines Turboladers abhängt. Diese Verzögerung liegt in einem Bereich von 200 bis 500 Millisekunden. Moderne Ottomotoren besitzen meist eine elektronische Drosselklappe für eine Luftmassenstromregulierung zur Brennkraftmaschine. Die elektronische Drosselklappe ist mechanisch von einem Fahrpedal entkoppelt. Da ein entsprechendes Drosselklappenstellglied eine endliche Einstellgeschwindigkeit besitzt und dynamische Füllungseffekte durch die Luftpfaddynamik im Saugrohr vorliegen, ist eine hochdynamische Einstellung eines vorgegeben Luftmassenstromes und der dadurch erzeugten aktuellen Füllung nicht möglich. Das dynamische Maximalmoment, hängt weitestgehend von der aktuellen Drehzahl und der aktuellen Füllung ab. Das erzeugte Ist-Drehmoment kann nahezu verzögerungsfrei bis auf das dynamische Maximalmoment erhöht werden. Ein Erreichen des dynamischen Maximalmoments bei einem Ottomotor in einem Homogenbetrieb ist durch Verändern eines Zündwinkels möglich. Bei einem Dieselmotor oder Ottomotor im Inhomogenbetrieb kann das dynamische Maximalmoment durch ein Einstellen einer Einspritzmenge erreicht werden. Diese Einstellung ist meist von einer zur nächsten Zündung möglich, was eine zeitliche Verzögerung von ca. 30 Millisekunden bedeutet. Ein Eingriff in den Zündwinkel verändert den Wirkungsgrad des Ottomotors und wirkt sich auf das Ist-Drehmoment aus. Wird der Zündwinkel verkleinert, wird somit "früh" gezündet, erhöht sich das Ist-Drehmoment der Brennkraftmaschine. Bei dem kleinstmöglichen Zündwinkel gibt der Ottomotor sein dynamisches Maximalmoment ab. Eine Änderung des Zündwinkels kann für jede einzelne Zündung neu erfolgen, wodurch das dynamische Maximalmoment nahezu verzögerungsfrei eingestellt werden kann.

Bei einem Dieselmotor kann eine Änderung der Einspritzmenge das erzeugte Ist-Drehmoment nahezu verzögerungsfrei verändern, allerdings ist die maximale Einspritzmenge durch die Rauchgrenze und damit durch die aktuelle Füllung begrenzt Somit liegt ebenfalls ein dynamisches Maximalmoment für Dieselmotoren vor, das von der aktuellen Füllung abhängt und durch Änderung der Einspritzmenge von einer zur nächsten Einspritzung und damit nahezu verzögerungsfrei eingestellt werden kann. Bei Turbosystemen, die vielfach bei modernen Dieselmotoren eingesetzt werden, ist eine Änderungsdynamik der aktuellen Füllung ebenfalls durch die Dynamik des Turbosystems begrenzt.

Wird die Brennkraftmaschine mit maximaler Füllung betrieben, dann entspricht das dynamische Maximalmoment dem stationären Maximalmoment In allen anderen Betriebszuständen liegt das dynamische Maximalmoment unterhalb des stationären Maximalmoments, da sich die aktuelle Füllung unter der maximalen Füllung befindet

Für die Steuerung eines Hybridfahrzeugs müssen Leistungen bzw. Soll-Drehmomente auf mehrere Antriebsaggregate, insbesondere eine Brennkraftmaschine und eine oder mehrere elektrische Maschinen, aufgeteilt werden. Dazu ist Kenntnis über die möglichen Betriebsbereiche bzw. die maximal erzeugbaren Drehmomente der Antriebsaggregate erforderlich. Eine Unterscheidung zwischen dem dynamischen Maximalmoment und dem stationären Maximalmoment bei der Brennkraftmaschine ist wichtig, um die Unterstützung der Brennkraftmaschine durch eine oder mehrere elektrische Maschinen optimal zu koordinieren. Dies soll beispielhaft anhand von zwei Betriebszuständen verdeutlicht werden. In dem ersten Betriebszustand soll die Elektromaschine die Brennkraftmaschine nur kurzzeitig unterstützen, bis das aktuell zu geringe dynamische Maximalmoment der Brennkraftmaschine durch Erhöhung der aktuellen Füllung gesteigert wurde. Somit reicht das dynamische Maximalmoment aufgrund der Luftpfaddynamik nur temporär nicht aus, um eine Drehmomentanforderung zu erfüllen. Das stationäre Maximalmoment hingegen ist ausreichend. Eine derartige Unterstützung wird als Instationärausgleich bezeichnet Im zweiten Fall soll die elektrische Maschine die Brennkraftmaschine längerfristig unterstützen, da die Brennkraftmaschine bereits mit maximaler Füllung betrieben wird, wodurch das dynamische Maximalmoment dem stationären Maximalmoment entspricht und nicht mehr gesteigert werden kann. Eine derartige Unterstützung wird als "Boost" bezeichnet. Beide Betriebszustände erfordern unterschiedliche Strategien in der Koordination der verschiedenen Antriebsaggregate und erfordern entsprechende Abregelmechanismen, die eine Unterstützung der Brennkraftmaschine durch die elektrische Maschine beenden. Beispielsweise kann dies der Fall sein, wenn der Energiegehalt eines elektrischen Energiespeichers für die elektrische Maschine unter einen bestimmten Wert sinkt. Damit eine Steuerung die Betriebsarten unterscheiden und koordinieren beziehungsweise die Abregelmechanismen ausführen kann, werden das stationäre Maximalmoment und das dynamische Maximalmoment ermittelt und der Steuerung zur Verfügung gestellt Um das stationäre Maximalmoment ermitteln zu können muss die maximale Füllung erfasst werden, was nur durch eine Abschätzung möglich ist, sofern die Brennkraftmaschine momentan nicht bei der maximalen Füllung betrieben wird. Daraus ergeben sich Ungenauigkeiten, da nicht die gesamte Komplexität der Luftpfaddynamik bei der Abschätzung nachvollzogen werden kann. Die dafür erforderlichen physikalischen Eingangsgrößen werden aus Kostengründen nicht gemessen oder können wegen Ungenauigkeiten von Sensoren nicht exakt ermittelt werden. Das ermittelte stationäre Maximalmoment kann somit Ungenauigkeiten aufweisen. Wird die Brennkraftmaschine bei Volllast betrieben, wobei die aktuelle Füllung der maximalen Füllung entspricht, so kann das ermittelte stationäre Maximalmoment infolge der Ungenauigkeiten vom ermittelten dynamischen Maximalmoment abweichen. Die Steuerung, insbesondere eine Steuerung eines Hybridfahrzeugs, die das stationäre und das dynamische Maximalmoment als Eingangsgrößen nutzt, erhält damit zum Teil unplausible und widersprüchliche Angaben, was einer optimalen Ansteuerung entgegensteht

Offenbarung der Erfindung

Aufgrund des erfindungsgemäßen Verfahrens ist vorgesehen, dass das ermittelte stationäre Maximalmoment ein stationäres Ausgangsmaximalmoment ist, das durch Adaption derart zu einem stationären Ergebnismaximalmoment verändert wird, dass es größer als oder gleich groß wie das ermittelte dynamische Maximalmoment ist Um eine optimale Ansteuerung der Brennkraftmaschine erreichen zu können, muss das stationäre Maximalmoment immer größer oder gleich dem dynamischen Maximalmoment sein, da eine Angabe, dass das stationäre Maximalmoment kleiner als das dynamische Maximalmoment ist unplausibel ist und für einen Betrieb der Brennkraftmaschine nicht korrekt ausgewertet werden kann. Ferner müssen sich bei einem Betrieb der Brennkraftmaschine mit maximaler Füllung das stationäre und das dynamische Maximalmoment gleichen. Aus diesen Gründen wird das aktuell ermittelte stationäre Maximalmoment an das ermittelte dynamische Maximalmoment angepasst, indem es zunächst als stationäres Ausgangsmaximalmoment betrachtet und mit dem aktuell ermittelten dynamischen Maximalmoment verglichen wird. Liegt dann eine Verletzung einer der beiden Bedingungen vor, so wird das stationäre Ausgangsmaximalmoment zu einem stationären Ergebnismaximalmoment verändert, das die Bedingungen vollständig oder zumindest verbessert erfüllt. Das stationäre Ergebnismaximalmoment kann dann für einen Betrieb der Brennkraftmaschine plausibel ausgewertet werden.

Nach einer Weiterbildung der Erfindung ist vorgesehen, dass das stationäre und/oder dynamische Maximalmoment jeweils mittels eines Modells aus mindestens einer Größe und/oder aus mindestens aus einer Kennlinie ermittelt werden. Da, wie bereits im Stand der Technik beschrieben, die erforderlichen Größen zur Bestimmung der maximalen Füllung aus wirtschaftlichen Gründen nicht gemessen werden, oder aufgrund von Ungenauigkeiten der Sensoren nicht exakt ermittelt werden können, wird das stationäre Maximalmoment mittels des Modells, eines Berechnungsmodells, berechnet. Das Berechnungsmodell enthält einen vereinfachten Zusammenhang zur Ermittlung der maximalen Füllung, welche dann in Abhängigkeit erfasster Größen bestimmt werden kann. Alternativ wird die maximale Füllung oder das stationäre Maximalmoment mit Hilfe einer Kennlinie ermittelt, welche Werte enthält, die durch Versuche, beispielsweise an Motorprüfständen, ermittelt worden sind. Das dynamische Maximalmoment kann ebenfalls mittels eines entsprechenden Modells, welches ebenfalls ein Berechnungsmodell ist, berechnet werden. Dieses Berechnungsmodell enthält einen vereinfachten Zusammenhang zur Ermittlung der aktuellen Füllung, welche dann in Abhängigkeit erfasster Größen bestimmt werden kann. Auch bei dem dynamischen Maximalmoment ist alternativ eine Bestimmung der aktuellen Füllung über eine Kennlinie möglich.

Nach einer Weiterbildung der Erfindung ist vorgesehen, dass zur Ermittlung des stationären Maximalmoments als Größe die Drehzahl der Brennkraftmaschine, eine Füllung, insbesondere eine maximale Füllung, mindestens einer Brennkammer der Brennkraftmaschine, einen Zündwinkel, insbesondere der kleinstmögliche Zündwinkel, einer Zündvorrichtung der Brennkraftmaschine, eine Kraftstoffmenge, eine Einspritzmenge, insbesondere eine maximal mögliche Einspritzmenge, eine Kraftstoffverteilung in der Brennkammer, eine Kraftstoffqualität und/oder eine Luftzahl verwendet wird. Bei der Ermittlung des stationären Maximalmoments ist insbesondere das Prinzip der Brennkraftmaschine zu berücksichtigen, da dieses die verfügbaren Größen einschränkt. Bei einer Dieselkraftmaschine besteht beispielsweise die Füllung nur aus Luft und es existiert kein Zündwinkel. Bei einer Ottobrennkraftmaschine hingegen besteht die Füllung aus einem Luft-Kraftstoff-Gemisch, welches in die Brennkraftmaschine eingeleitet oder in der Brennkammer mittels einer Einspritzvorrichtung erzeugt wird, wodurch sich ein anderes Füllungsverhalten ergibt. Zudem kann die Erzeugung des stationären Maximalmoments abhängig von der Kraftstoffverteilung in der Brennkammer, welche nur durch konstruktive Maßnahmen verändert werden kann, der Kraftstoffqualität, welche die Stärke der Verbrennung beeinflusst und der Luftzahl, welche die Gemischzusammensetzung aus Luft und Kraftstoff beschreibt, errechnet werden. Die zusätzliche Anwendung dieser Größen bringt eine Verbesserung der Genauigkeit in der Ermittlung. Nach einer Weiterbildung der Erfindung ist vorgesehen, dass zur Ermittlung des dynamischen Maximalmoments als Größen die Drehzahl der Brennkraftmaschine, die Füllung, insbesondere die aktuelle Füllung, der Brennkammer der Brennkraftmaschine, der Zündwinkel, insbesondere der kleinste mögliche Zündwinkel, der Zündvorrichtung der Brennkraftmaschine, die Kraftstoffmenge, die Einspritzmenge, insbesondere die maximal mögliche Einspritzmenge, die Kraftstoffverteilung in der Brennkammer, die Kraftstoffqualität und/oder die Luftzahl verwendet wird. Der Unterschied zwischen der Ermittlung des dynamischen Maximalmoments und der Ermittlung des stationären Maximalmoments liegt darin, dass das dynamische Maximalmoment anhand der aktuellen Füllung der Brennkammer ermittelt wird. Die aktuelle Füllung kann zu diesem Zweck vorzugweise anhand von gemessenen Größen wie in der Brennkraftmaschine umgesetzte Luftmasse, einer Drehzahl der Brennkraftmaschine, einem Saugrohr- und/oder Ladedruck, einer Ansauglufttemperatur, eines Umgebungsluftdrucks, einer Drosselklappenstellung, einer Abgasrückführrate, einer Position von mindestens einer Nockenwelle, einer Position von mindestens einer Ansaugtraktklappe, der Drehzahl, der Kraftstoffqualität und/oder der Luftzahl ermittelt werden. Eine Genauigkeit der Ermittlung des dynamischen Maximalmoments hängt insbesondere von Genauigkeiten der ihr zugeführten Größen und von einer Genauigkeit der ermittelten aktuellen Füllung ab, welche insbesondere von Messgenauigkeiten verwendeter Sensoren zur Erfassung entsprechender Signale abhängig sind.

Nach einer Weiterbildung der Erfindung ist vorgesehen, dass eine Kennlinie verwendet wird, wobei die Kennlinie das stationäre und/oder dynamische Maximalmoment anhand mindestens einer Größe, insbesondere der Drehzahl der Brennkraftmaschine, beschreibt. Drehzahlen werden häufig in Kraftfahrzeugen ermittelt. Sie stellen in Verbindung mit der Kennlinie eine einfach zu realisierende Möglichkeit dar, insbesondere ein stationäres Ausgangsmaximalmoment und/oder ein dynamisches Maximalmoment zu ermitteln.

Nach einer Weiterbildung der Erfindung ist vorgesehen, dass für die Adaption das stationäre Ausgangsmaximalmoment mit mindestens einem Korrekturterm beaufschlagt wird, um das stationäre Ergebnismaximalmoment zu erhalten. Dabei kann der Korrekturterm beispielsweise ein Skalar, ein Vektor oder eine Funktion sein. Der Vektor ist dabei vorzugsweise über eine oder mehrere der gemessenen oder berechneten Größen aufgespannt. Damit wird erreicht, dass das stationäre Ergebnismaximalmoment eine höhere Genauigkeit erzielt als das stationäre Ausgangsmaximalmoment und eine Übereinstimmung zwischen dem stationären Ergebnismaximalmoment und dem dynamischen Maximalmoment erreicht wird, sofern die Brennkraftmaschine bei der maximalen Füllung betrieben wird. Daneben kann die Adaption des stationären Maximalmoments auch dann erfolgen, wenn eine Limitierung des dynamischen Maximalmoments zum Beispiel durch Bauteileschutzmechanismen vorliegt.

Nach einer Weiterbildung des Verfahrens ist vorgesehen, dass der Korrekturterm durch eine Korrekturtermadaption derart verändert wird, dass sich das stationäre Ergebnismaximalmoment an das dynamische Maximalmoment annähert und an dieses angleicht Um den Korrekturterm auf den richtigen Wert zu bringen ist vorgesehen, dass der Korrekturterm mittels der Korrekturtermadaption angepasst wird. Diese Anpassung wird überprüft, indem das Verhalten des stationären Ergebnismaximalmoments gegenüber dem dynamischen Maximalmoment berücksichtigt wird, wobei das dynamische Maximalmoment als Referenz fungiert. Eine Veränderung des Korrekturterms kann durch die Beaufschlagung mittels eines Korrekturtermadaptionsskalars, eines Korrekturtermadaptionsvektors und/oder einer Korrekturtermfunktion erfolgen, der über eine oder mehrere gemessene oder berechnete Größen aufgespannt ist.

Nach einer Weiterbildung der Erfindung ist vorgesehen, dass die Korrekturtermadaption dann durchgeführt wird, wenn ein Betrieb der Brennkraftmaschine mit maximaler Füllung der Brennkammer detektiert wird. Wird die Brennkraftmaschine mit maximaler Füllung betrieben, so gilt die Bedingung, dass das dynamische Maximalmoment und das stationäre Ergebnismaximalmoment gleich sein müssen. Wenn die Korrekturtermadaption erkennt, dass die Brennkraftmaschine bei der maximalen Füllung betrieben wird, so wird der Korrekturterm derart angepasst, dass sich das dynamische Maximalmoment und das stationäre Ergebnismaximalmoment gleichen.

Nach einer Weiterbildung der Erfindung ist vorgesehen, dass der Betrieb der Brennkraftmaschine bei maximaler Füllung mittels der Stellung einer Drosselklappe der Brennkraftmaschine detektiert wird. Die Stellung der Drosselklappe lässt einen Rückschluss auf den Luftmassenstrom in die Brennkraftmaschine zu. Wenn die Drosselklappe fast oder vollständig geöffnet ist, so stellt sich aufgrund des hohen Luftmassenstroms die maximale Füllung ein. Weiter können der Saugrohrdruck, der Ladedruck eines Turbosystems, und/oder eine Begrenzung des Ladedrucks als Indikator für einen Betrieb der Brennkraftmaschine bei maximaler Füllung verwendet werden. Ferner gilt als derartiger Indikator auch eine Zeitspanne, über die eine hohe Energie, beispielsweise infolge großer Einspritzmengen, im Abgas vorgelegen hat, da danach eine weitere Steigerung des Ladedrucks eines Turbosystems und damit eine Erhöhung der Füllung nicht zu erwarten ist.

Nach einer Weiterbildung der Erfindung ist vorgesehen, dass zur sicheren Detektion des Betriebs der Brennkraftmaschine bei maximaler Füllung eine Verzögerungszeit abgewartet wird. Wird nach Detektion eines entsprechenden Indikators eine maximale Füllung erwartet, ist es vorteilhaft, wenn eine Verzögerungszeit abgewartet wird, bis sich die maximale Füllung vollständig gebildet hat und tatsächlich ihre Wirkung entfaltet, bevor eine Adaption vorgenommen wird.

Nach einer Weiterbildung der Erfindung ist vorgesehen, dass die Korrekturtermadaption dann durchgeführt wird, wenn das stationäre Ergebnismaximalmoment kleiner ist, als das ermittelte dynamische Maximalmoment. Da dieser Zustand die notwendigen Bedingungen verletzt, handelt es sich um einen Mess- beziehungsweise Ermittlungsfehler, welcher dadurch ausgeglichen werden kann, dass das stationäre Ergebnismaximalmoment vergrößert wird, bis das stationäre Ergebnismaximalmoment gleich dem dynamischen Maximalmoment ist. Dabei kann auch eine Korrekturtermadaption bereits dann durchgeführt werden, wenn diese Verletzung der Bedingung abzusehen ist.

Nach einer Weiterbildung der Erfindung ist vorgesehen, dass es bei einer Hybridantriebsvorrichtung angewendet wird. Mit plausiblen und nicht widersprüchlichen stationären und dynamischen Maximalmomenten kann die Koordination einer Fahrzeugsteuerung, insbesondere der Steuerung eines Hybridfahrzeugs, optimiert werden, da eine optimale Aufteilung der Gesamtmomentanforderung nach Maßgabe der einzelnen Antriebsaggregate erfolgen kann.

Weiter ist eine Brennkraftmaschine vorgesehen, die insbesondere zur Durchführung des vorhergehend beschriebenen Verfahrens verwendet wird, für die ein Wert eines stationären Maximalmoments und ein Wert eines dynamischen Maximalmoments ermittelt wird. Diese Brennkraftmaschine weist eine Adaptionsvorrichtung auf, die das ermittelte stationäre Maximalmoment, ein stationäres Ausgangsmaximalmoment, derart zu einem stationären Ergebnismaximalmoment verändert, sodass es größer als oder gleichgroß wie das ermittelte dynamische Maximalmoment ist

Zudem ist eine Hybridantriebsvorrichtung eines Kraftfahrzeugs vorgesehen, die insbesondere zur Durchführung des vorhergehend beschriebenen Verfahrens eingesetzt wird, die zumindest zwei unterschiedliche Antriebsaggregate, eine Brennkraftmaschine und insbesondere eine elektrische Maschine aufweist, wobei für die Brennkraftmaschine ein stationäres Maximalmoment und ein dynamisches Maximalmoment ermittelt wird. Dabei ist vorgesehen, dass die Hybridantriebsvorrichtung eine Adaptionsvorrichtung aufweist, die das ermittelte stationäre Maximalmoment, ein stationäres Ausgangsmaximalmoment, derart zu einem stationären Ergebnismaximalmoment verändert, sodass es größer als oder gleichgroß wie das ermittelte dynamische Maximalmoment ist

Kurze Beschreibung der Zeichnungen

Die Zeichnungen veranschaulichen die Erfindung anhand eines Ausführungsbeispiels, und zwar zeigt:

Figur 1    ein Ausführungsbeispiel des erfindungsgemäßen Verfahrens,

Figur 2    Simulationsergebnisse des Ausführungsbeispiels aus Figur 1 und

Figur 3    Simulationsergebnisse des Ausführungsbeispiels aus Figur 1.

Ausführungsform(en) der Erfindung

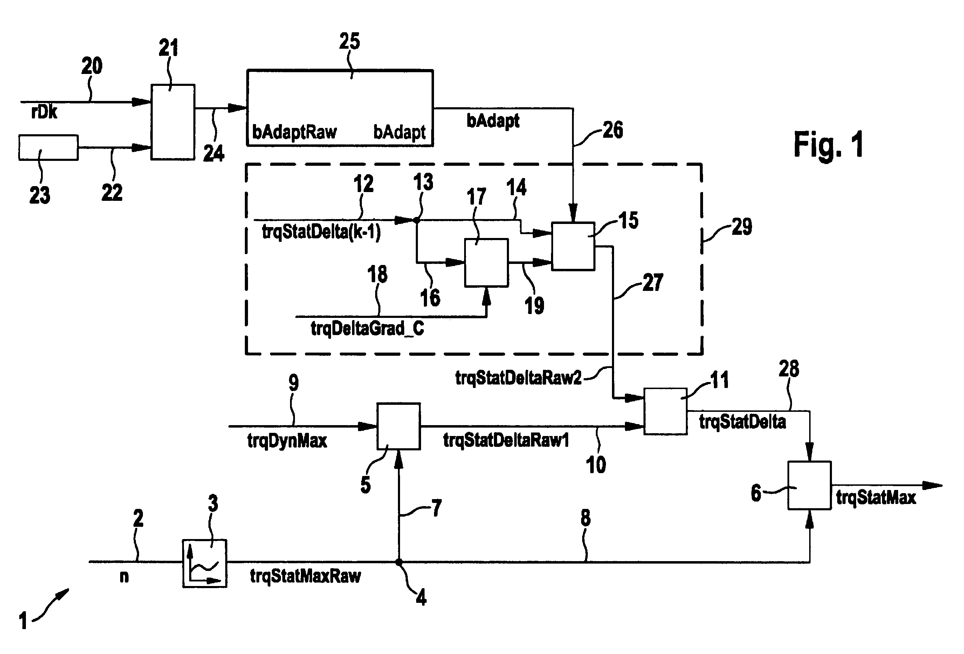

Die Figur 1 zeigt ein Ausführungsbeispiel des erfindungsgemäßen Verfahrens für eine Adaption eines stationären Maximalmoments. Das Ausführungsbeispiel bezieht sich auf einen nicht dargestellten Otto-Saugmotor mit einer elektronischen Drosselklappe und besteht aus einer Berechnungsvorschrift 1, die im Sinne eines Abtastsystems in einzelnen Abtastschritten zyklisch abgearbeitet wird. Dabei werden in einem Abtastschritt k, mit der Periodendauer T, berechnete Werte abgespeichert und in einem nachfolgenden Abtastschritt k+1 verwendet. Dies ermöglicht, dass die in einem vorherigen Abtastschritt (k-1) berechneten und dann abgespeicherten Werte benutzt werden können, um für den aktuellen Abtastschritt k gültige Werte zu berechnen. Die Berechnungsvorschrift 1 erhält eine Drehzahl n über einen Pfeil 2, die einer Kennlinie 3 zugeführt wird. Die Kennlinie 3 ermittelt ein stationäres Maximalmoment trqStatMaxRaw, welches an einen Knotenpunkt 4 weitergeleitet wird. Ausgehend von dem Knotenpunkt 4 wird das stationäre Maximalmoment trqStatMaxRaw zum Einen an einen Subtrahierer 5 und zum Anderen an einen Addierer 6 über Pfeile 7 und 8 weitergeleitet. Dem Subtrahierer 5 wird über einen Pfeil 9 ein ermitteltes dynamisches Maximalmoment trqDynMax zugeführt, von dem im Subtrahierer 5 das stationäre Maximalmoment trqStatMaxRaw, das stationäre Ausgangsmaximalmoment, subtrahiert wird. Daraus ergibt sich im Subtrahierer 5 ein erster Vorkorrekturwert trqStatDeltaRaw1, welcher über einen Pfeil 10 an einen Maximierer 11 weitergegeben wird. Der Berechnungsvorschrift 1 wird ferner ein Korrekturterm trqStatDelta (k-1) des vorhergehenden Abtastschritts (k-1) über einen Pfeil 12 zugeführt. Der Pfeil 12 führt zu einem Knotenpunkt 13, von dem ein Pfeil 14 zu einem Umschaltblock 15 führt und ein Pfeil 16 zu einem Subtrahierer 17 verläuft. Dem Subtrahierer 17 wird zudem ein Korrekturadaptionsterm trqDeltaGrad_C über einen Pfeil 18 zugeführt. Der Subtrahierer 17 zieht den Korrekturadaptionsterm trqDeltaGrad_C von dem Korrekturwert trqStatDelta (k-1) ab und leitet das Ergebnis über einen Pfeil 19 an den Umschaltblock 15 weiter. Eine relative Drosselklappenstellung rDk wird über einen Pfeil 20 an einen Vergleichsblock 21 weitergeben, der zusätzlich über einen Pfeil 22 einen Festwert 23 erhält. Der Vergleichsblock 21 gibt ein binäres Adaptionsvorsignal bAdaptRaw über einen Pfeil 24 an einen Zeitverzögerer 25 weiter. Der Zeitverzögerer 25 verzögert das binäre Adaptionsvorsignal bAdaptRaw und erzeugt dadurch ein binäres Adaptionssignal bAdapt, welches über einen Pfeil 26 an den Umschaltblock 15 weitergegeben wird. In Abhängigkeit des binären Adaptionssignals bAdapt wird der Umschaltblock 15 geschaltet und liefert einen entsprechenden zweiten Vorkorrekturwert trqStatDeltaRaw2 über einen Pfeil 27 an den Maximierer 11. Der Maximierer 11 wählt den Vorkorrekturwert aus, der von den zwei Vorkorrekturwerten trqStatDeltaRaw1 und trqStatDeltaRaw2 der größere ist und gibt diesen als Korrekturwert trqStatDelta über einen Pfeil 28 an den Addierer 6 weiter. Im Addierer 6 wird der Korrekturwert trqStatDelta mit dem stationären Maximalmoment trqStatMaxRaw zu einem stationären Ergebnismaximalmoment trqStatMax zusammenaddiert. Die Berechnungsvorschrift 1 für die Ermittlung des stationären Ergebnismaximalmoments trqStatMax besteht somit aus einer Kennlinie 3, die auf Basis der aktuellen Drehzahl n des Ottomotors das stationäre Maximalmoment trqStatMaxRaw ermittelt und diese mit einem Korrekturwert trqStatDelta addiert. Die Bedatung der Kennlinie 3 ist an einem Prüfstand im Vorfeld ermittelt worden. Der erste Vorkorrekturwert trqStatDeltaRaw1 für den Korrekturwert trqStatDelta berechnet sich aus dem dynamischen Maximalmoment trqDynMax, welches außerhalb der Berechnungsvorschrift 1 beispielsweise anhand von Messsignalen bereits bestimmt worden ist. Ein zweiter Vorkorrekturwert trqStatDeltaRaw2 wird innerhalb einer Korrekturtermadaption 29 für den Zeitpunkt k berechnet Zunächst wird die relative Drosselklappenstellung rDk im Vergleichsblock 21 mit dem Festwert 23 verglichen. Ist rDk größer als der Festwert 23, so wird das binäre Adaptionsvorsignal bAdaptRaw = true gesetzt und im Block 25 für eine bestimmte Zeitspanne verzögert. Das durch den Zeitverzögerer 25 erzeugte binäre Adaptionssignal bAdapt steuert die Korrekturtermadaption 29, wobei davon ausgegangen wird, dass bei einer Änderung des binären Adaptionssignal auf bAdapt = true die aktuelle Füllung der Brennkraftmaschine der maximalen Füllung entspricht Die Korrekturtermadaption 29 ändert dann den Korrekturwert trqStatDelta, indem dieser im aktuellen Abtastschritt k aus dem im vorigen Abtastschritt k-1 gültigen Korrekturwert trqStatDelta (k-1) berechnet wird. Gibt das binäre Adaptionssignal mit bAdapt = true vor, dass die aktuelle Füllung der maximalen Füllung entspricht, so gilt für den Vorkorrekturwert trqStatDeltaRaw2(k) zum Zeitpunkt k:

$$trqStatDeltaRaw2(k) = trqStatDelta(k\text{-}1) - trqDeltaGrad\_C.$$

Es wird dabei der im vorigen Abtastschritt (k-1) gültige Korrekturwert trqStatDelta (k-1) um den Korrekturadaptionsterm trqDeltaGrad_C vermindert. Im Anschluss an die Bildung des zweiten Vorkorrekturwerts trqStatDeltaRaw2 werden im Maximierer 11 der erste Vorkorrekturwert trqStatDeltaRaw1 und der zweite Vorkorrekturwert trqStatDeltaRaw2 miteinander verglichen und der größere Wert als Korrekturwert trqStatDelta an den Addierer 6 weitergegeben, wo dieser mit dem stationären Maximalmoment trqStatMaxRaw addiert wird, woraus sich das stationäre Ergebnismaximalmoment trqStatMax ergibt. In dem dargestellten Ausführungsbeispiel ist für den Korrekturadaptionsterm trqDeltaGrad_C ein Wert von 0,5 Nm vorgegeben. Bei einer Abtastperiodendauer T von 10 ms ergibt sich daraus eine Abnahme des Korrekturwerts trqStatDelta mit einem Gradienten von -50 Nm/s. Der Korrekturwert trqStatDelta nähert sich mit diesem Gradienten an den ersten Vorkorrekturwert trqStatDeltaRaw1 an. Aufgrund des Maximierers 11 kann der Korrekturwert trqStatDelta nicht kleiner werden als der erste Vorkorrekturwert trqStatDeltaRaw1. Somit läuft bei aktiver Korrekturtermadaption das stationäre Ergebnismaximalmoment trqStatMax gegen das dynamische Maximalmoment trqDynMax. Dabei ist ausgeschlossen, dass das stationäre Ergebnismaximalmoment trqStatMax kleiner wird als das dynamische Maximalmoment trqDynMax. Es gilt somit in dem Maximierer 11 zum Zeitpunkt k für den Korrekturwert trqStatDelta(k) folgendes:

$$trqStatDelta(k) = MAX\ [trqStatDelta(k\text{-}1) - trqDeltaGrad\_C, trqStatDeltaRaw1(k)].$$

Bei nicht aktiver Korrekturtermadaption 29 mit bAdapt=false gilt in dem Maximierer 11 folgendes:

$$trqStatDelta\ (k) = MAX\ [trqStatDelta\ (k\text{-}1), trqStatDeltaRaw1(k)].$$

Der Korrekturwert trqStatDelta bleibt somit auf seinem alten Wert, oder folgt dem ersten Vorkorrekturwert. Dadurch kann das stationäre Ergebnismaximalmoment trqStatMax nicht kleiner werden als das dynamische Maximalmoment trqDynMax. Ein konstantes Erhalten des Korrekturwerts trqStatDelta führt dazu, dass sich die Ergebnisse der Abtastschritte k mit aktiver Korrekturtermadaption 29 auch auf Abtastschritte k ohne aktive Korrekturtermadaption 29 auswirken. Bei wiederholt aktiv werdender Korrekturtermadaption 29 liegt dann bereits ein günstiger Startwert vor, der im Idealfall nur wenig korrigiert werden muss.

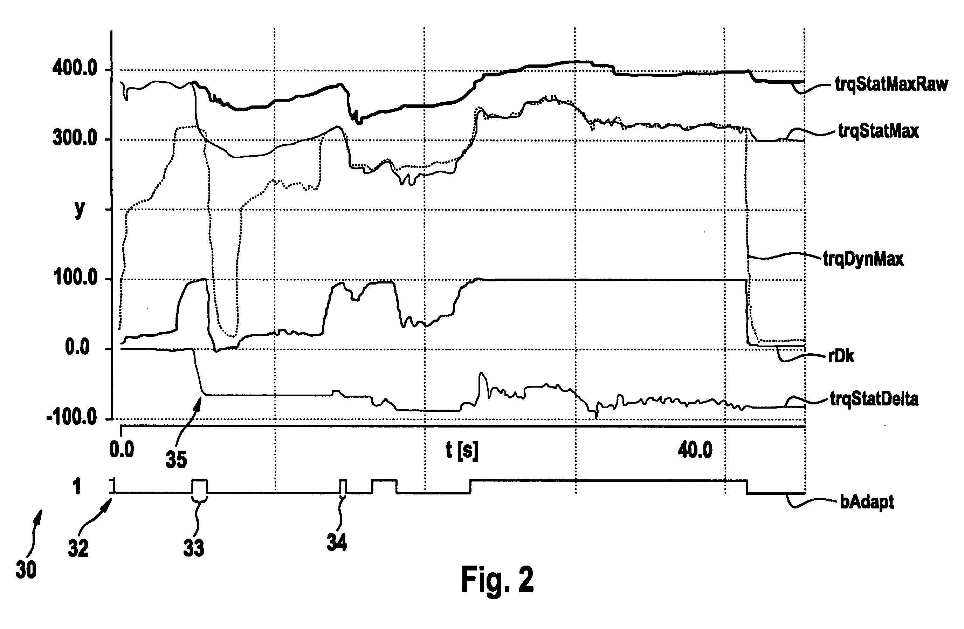

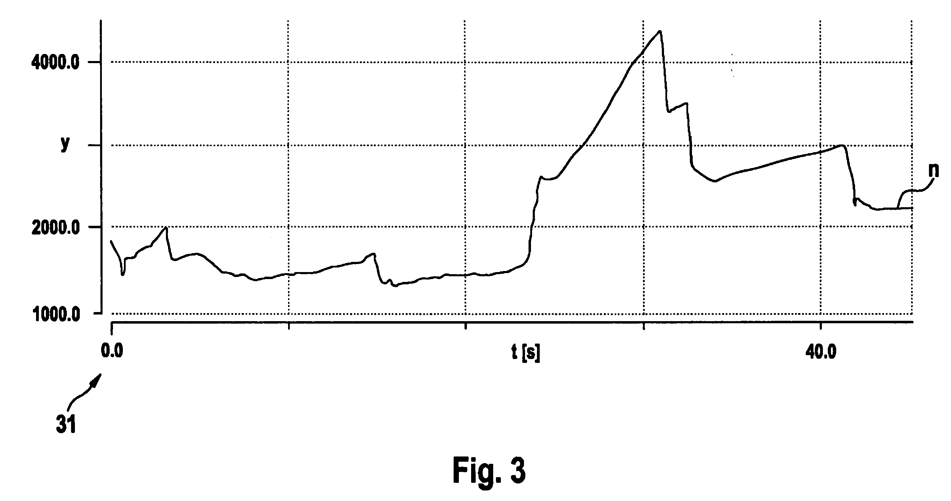

Die Figuren 2 und 3 zeigen Messergebnisse des Ausführungsbeispiels aus Figur 1. Die Figur 2 zeigt in einem kartesischen Koordinatensystem 30 die zeitlichen Verläufe der Signale des Korrekturwerts trqStatDelta, der Drosselklappstellung rDk, des dynamischen Maximalmoments trqDynMax, des stationären Maximalmoments trqStatMaxRaw und des stationären Ergebnismaximalmoments trqStatMax. Ferner ist unterhalb des kartesischen Koordinatensystems 30 ein weiteres Koordinatensystem 32 dargestellt, welches das binäre Signal bAdapt in seinem zeitlichen Verlauf zeigt. Im kartesischen Koordinatensystem 31 der Figur 3 ist die Drehzahl n einer Brennkraftmaschine dargestellt. Die Eingangsgrößen Drosselklappenstellung rDk, dynamisches Maximalmoment trqDynMax und aktuelle Drehzahl n sind an einem realen Fahrzeug ermittelt worden. Zu Beginn der Messung wurde der Korrekturwert trqStatDelta auf 0 Nm initialisiert, läuft aber bereits bei einer ersten Korrekturtermadaptionsphase 33 schnell auf einen optimalen Wert 35. Durch die konstante Beibehaltung des Werts 35 nach der Adaptionsphase 33 liegt für die folgende, zweite Korrekturtermadaptionsphase 34 bereits ein günstiger Startwert vor, wodurch der Korrekturwert trqStatDelta während der zweiten Korrekturtermadaptionsphase 34 nur wenig verändert wird. Die Bedatung der Kennlinie 3 aus Figur 1 und das daraus folgende stationäre Maximalmoment trqStatMaxRaw ist derart gewählt worden, dass insbesondere die Wirkung des erfindungsgemäßen Verfahrens gut dargestellt werden kann. Die Anpassungen des Korrekturwerts trqStatDelta erfolgen, da mit der Kennlinie 3 die Drehzahlabhängigkeit nicht optimal erfasst wird.

Das Ausführungsbeispiel kann verbessert werden, indem in einer alternativen Ausprägung der Erfindung ein Korrekturvektor statt eines skalaren Korrekturwertes trqStatDelta eingesetzt wird. Dabei sind die einzelnen Vektorelemente des Korrekturvektors einzelnen Stützstellen der gemessenen oder berechneten Eingangsgrößen zugeordnet. Der Korrekturvektor kann beispielsweise über der aktuellen Drehzahl n aufgespannt sein, wobei Drehzahlstützstellen für 1000 U/min, 2000 U/min, ...., 6000 U/min existieren, die jeweils einem Vektorelement zugeordnet sind. Ein der aktuellen Drehzahl n zugeordneter Korrekturwert trqStatDelta berechnet sich dann aus den zugeordneten Vektorelementen der beiden nächstliegenden Drehzahlstützstellen durch eine lineare Interpolation. Eine Veränderung des Korrekturwerts trqStatDelta, der der aktuellen Drehzahl n zugeordnet ist, wird gewichtet auf die Vektorelemente der beiden nächstliegenden Drehzahlstützstellen aufgeteilt. Ferner sind auch mehrdimensionale Korrekturvektoren möglich, wobei einzelne Dimensionen den einzelnen Eingangsgrößen zugeordnet sind. Zudem ist im Ausführungsbeispiel ein additiver Korrekturwert dargestellt, wobei auch multiplikative Korrekturfaktoren oder Polynomialansätze möglich sind.

Bei einem Turbodieselmotor kann die Korrekturtermadaption erfolgen, wenn über eine vorgegebene Zeitspanne ein Sollmoment nahe dem dynamischen Maximalmoment trqDynMax vorgegeben wurde, sodass eine hohe Einspritzmenge und eine hohe Energie im Abgas vorgelegen hat. Dann ist eine weitere Steigerung der Turbosystemdrehzahl beziehungsweise des Ladedrucks und damit der Füllung nicht zu erwarten. Alternativ kann eine Korrekturtermadaption erfolgen, wenn eine Ladedruckregelung den Ladedruck und damit die Füllung begrenzt

Sofern notwendig, kann die Adaption des stationären Maximalmoments und/oder die Korrekturtermadaption bei bestimmten Betriebszuständen der Brennkraftmaschine gesperrt werden, um eine Fehladaption zu vermeiden. Dies ist beispielsweise bei einer starken Drehzahländerung der Brennkraftmaschine denkbar.

**Patentansprüche**

1. Verfahren zum Betreiben einer Brennkraftmaschine, für die ein stationäres Maximalmoment und ein dynamisches Maximalmoment ermittelt wird, **dadurch gekennzeichnet, dass** das ermittelte stationäre Maximalmoment ein stationäres Ausgangsmaximalmoment ist, das durch Adaption derart zu einem stationären Ergebnismaximalmoment verändert wird, dass es größer als oder gleich groß wie das ermittelte dynamische Maximalmoment ist

2. Verfahren nach Anspruch 1, **dadurch gekennzeichnet, dass** das stationäre und/oder das dynamische Maximalmoment jeweils mittels eines Modells aus mindestens einer Größe und/oder aus mindestens einer Kennlinie (3) ermittelt werden.

3. Verfahren nach einem der vorhergehenden Ansprüche, **dadurch gekennzeichnet, dass** zur Ermittlung des stationären Maximalmoments als Größe die Drehzahl der Brennkraftmaschine, eine Füllung, insbesondere eine maximale Füllung, mindestens einer Brennkammer der Brennkraftmaschine, ein Zündwinkel, insbesondere der kleinste mögliche Zündwinkel, einer Zündvorrichtung der Brennkraftmaschine, die Kraftstoffmenge, eine Einspritzmenge, insbesondere eine maximal mögliche Einspritzmenge, die Kraftstoffverteilung in der Brennkammer, eine Kraftstoffqualität und/oder eine Luftzahl verwendet wird.

4. Verfahren nach einem der vorhergehenden Ansprüche, **dadurch gekennzeichnet, dass** zur Ermittlung des dynamischen Maximalmoments als Größen die Drehzahl der Brennkraftmaschine, die Füllung, insbesondere die aktuelle Füllung, der Brennkammer der Brennkraftmaschine, der Zündwinkel, insbesondere der kleinste mögliche Zündwinkel, der Zündvorrichtung der Brennkraftmaschine, die Kraftstoffmenge, die Einspritzmenge, insbesondere die maximal mögliche Einspritzmenge, die Kraftstoffverteilung in der Brennkammer, die Kraftstoffqualität und/oder die Luftzahl verwendet wird.

5. Verfahren nach einem der vorhergehenden Ansprüche, **dadurch gekennzeichnet, dass** eine Kennlinie (3) verwendet wird, wobei die Kennlinie (3) das stationäre und/oder dynamische Maximalmoment anhand mindestens einer Größe, insbesondere der Drehzahl der Brennkraftmaschine, beschreibt

6. Verfahren nach einem der vorhergehenden Ansprüche, **dadurch gekennzeichnet, dass** für die Adaption das stationäre Ausgangsmaximalmoment mit mindestens einem Korrekturterm beaufschlagt wird, um das stationäre Ergebnismaximalmoment zu erhalten.

7. Verfahren nach einem der vorhergehenden Ansprüche, **dadurch gekennzeichnet, dass** der Korrekturterm durch eine Korrekturtermadaption derart verändert wird, dass sich das stationäre Ergebnismaximalmoment an das dynamische Maximalmoment annähert oder an dieses angleicht.

8. Verfahren nach einem der vorhergehenden Ansprüche, **dadurch gekennzeichnet, dass** die Korrekturtermadaption dann durchgeführt wird, wenn ein Betrieb der Brennkraftmaschine mit maximaler Füllung der Brennkammer detektiert wird.

9. Verfahren nach einem der vorhergehenden Ansprüche, **dadurch gekennzeichnet, dass** der Betrieb der Brennkraftmaschine bei maximaler Füllung mittels der Stellung einer Drosselklappe der Brennkraftmaschine detektiert wird.

10. Verfahren nach einem der vorhergehenden Ansprüche, **dadurch gekennzeichnet, dass** zur sicheren Detektion des Betriebs der Brennkraftmaschine bei maximaler Füllung eine Verzögerungszeit abgewartet wird.

11. Verfahren nach einem der vorhergehenden Ansprüche, **dadurch gekennzeichnet, dass** die Korrekturtermadaption dann durchgeführt wird, wenn das ermittelte stationäre Ergebnismaximalmoment kleiner ist als das ermittelte dynamische Maximalmoment

12. Verfahren nach einem der vorhergehenden Ansprüche, **dadurch gekennzeichnet, dass** es bei einer Hybridantriebsvorrichtung angewendet wird.

13. Brennkraftmaschine, insbesondere zur Durchführung des vorhergehend beschriebenen Verfahrens, für die ein Wert eines stationären Maximalmoments und ein Wert eines dynamischen Maximalmoments ermittelt wird, **dadurch gekennzeichnet, dass** sie eine Adaptionsvorrichtung aufweist, die das ermittelte stationäre Maximalmoment, das ein stationäres Ausgangsmaximalmoment ist, derart zu einem stationären Ergebnismaximalmoment verändert, dass es größer als oder gleich groß wie das ermittelte dynamische Maximalmoment ist

14. Hybridantriebsvorrichtung eines Kraftfahrzeugs, insbesondere zur Durchführung des vorgehend beschriebenen Verfahrens, die zumindest zwei unterschiedliche Antriebaggregate, eine Brennkraftmaschine und insbesondere eine elektrische Maschine, aufweist, wobei für die Brennkraftmaschine ein stationäres Maximalmoment und ein dynamisches Maximalmoment ermittelt wird, **dadurch gekennzeichnet, dass** sie eine Adaptionsvorrichtung aufweist, die das ermittelte stationäre Maximalmoment, das ein stationäres Ausgangsmaximalmoment ist, derart zu einem stationären Ergebnismaximalmoment verändert, dass es größer als oder gleich groß wie das ermittelte dynamische Maximalmoment ist.

## Claims

1. Method for operating an internal combustion engine for which a steady-state maximum torque and a dynamic maximum torque are determined, **characterized in that** the determined steady-state maximum torque is a steady-state initial maximum torque which, by adaptation, is varied to give a steady-state resultant maximum torque such that the latter is greater than or equal to the determined dynamic maximum torque.

2. Method according to Claim 1, **characterized in that** the steady-state and/or the dynamic maximum torque are determined in each case by means of a model from at least one variable and/or from at least one characteristic curve (3).

3. Method according to one of the preceding claims, **characterized in that**, as variables for determining the steady-state maximum torque, use is made of the rotational speed of the internal combustion engine, a charge, in particular a maximum charge, of at least one combustion chamber of the internal combustion engine, an ignition angle, in particular the smallest possible ignition angle, of an ignition device of the internal combustion engine, the fuel quantity, an injection quantity, in particular a maximum possible injection quantity, the fuel distribution in the combustion chamber, a fuel quality and/or an air ratio.

**4.** Method according to one of the preceding claims, **characterized in that**, as variables for determining the dynamic maximum torque, use is made of the rotational speed of the internal combustion engine, the charge, in particular the present charge, of the combustion chamber of the internal combustion engine, the ignition angle, in particular the smallest possible ignition angle, of the ignition device of the internal combustion engine, the fuel quantity, the injection quantity, in particular the maximum possible injection quantity, the fuel distribution in the combustion chamber, the fuel quality and/or the air ratio.

**5.** Method according to one of the preceding claims, **characterized in that** a characteristic curve (3) is used, wherein the characteristic curve (3) describes the steady-state and/or dynamic maximum torque on the basis of at least one variable, in particular the rotational speed of the internal combustion engine.

**6.** Method according to one of the preceding claims, **characterized in that**, for the adaptation, the steady-state initial maximum torque is adjusted by at least one corrective term in order to obtain the steady-state resultant maximum torque.

**7.** Method according to one of the preceding claims, **characterized in that** the corrective term is varied by means of a corrective term adaptation such that the steady-state resultant maximum torque approximates to or is aligned with the dynamic maximum torque.

**8.** Method according to one of the preceding claims, **characterized in that** the corrective term adaptation is performed when operation of the internal combustion engine with maximum charge of the combustion chamber is detected.

**9.** Method according to one of the preceding claims, **characterized in that** the operation of the internal combustion engine with maximum charge is detected by means of the position of a throttle flap of the internal combustion engine.

**10.** Method according to one of the preceding claims, **characterized in that**, for reliable detection of the operation of the internal combustion engine with maximum charge, a delay time is allowed to elapse.

**11.** Method according to one of the preceding claims, **characterized in that** the corrective term adaptation is performed when the determined steady-state resultant maximum torque is lower than the determined dynamic maximum torque.

**12.** Method according to one of the preceding claims, **characterized in that** it is implemented in a hybrid drive device.

**13.** Internal combustion engine, in particular for carrying out the method described above, for which a value of a steady-state maximum torque and a value of a dynamic maximum torque are determined, **characterized in that** said internal combustion engine has an adaptation device which varies the determined steady-state maximum torque, which is a steady-state initial maximum torque, to give a steady-state resultant maximum torque such that the latter is greater than or equal to the determined dynamic maximum torque.

**14.** Hybrid drive device of a motor vehicle, in particular for carrying out the method described above, which hybrid drive device has at least two different drive assemblies, an internal combustion engine and in particular an electric machine, wherein for the internal combustion engine, a steady-state maximum torque and a dynamic maximum torque are determined, **characterized in that** said hybrid drive device has an adaptation device which varies the determined steady-state maximum torque, which is a steady-state initial maximum torque, to give a steady-state resultant maximum torque such that the latter is greater than or equal to the determined dynamic maximum torque.

**Revendications**

**1.** Procédé pour faire fonctionner un moteur à combustion interne pour lequel sont déterminés un couple maximum stationnaire et un couple maximum dynamique, **caractérisé en ce que** le couple maximum stationnaire déterminé est un couple maximum initial stationnaire qui est modifié par adaptation en un couple maximum résultant stationnaire de telle sorte qu'il est supérieur ou égal au couple maximum dynamique déterminé.

**2.** Procédé selon la revendication 1, **caractérisé en ce que** le couple maximum stationnaire et/ou dynamique sont respectivement déterminés au moyen d'un modèle à partir d'au moins une grandeur et/ou à partir d'au moins une courbe caractéristique (3).

**3.** Procédé selon l'une des revendications précédentes, **caractérisé en ce que** pour la détermination du couple maximum stationnaire, la grandeur utilisée est la vitesse de rotation du moteur à combustion interne, un remplissage, notamment un remplissage maximum, d'au moins une chambre de combustion du moteur à combustion interne, un angle d'allumage, notamment le plus petit angle d'allumage possible, d'un dispositif d'allumage du moteur à combustion interne, la quantité de carburant, une quantité d'injection, notamment une quantité d'injection maximale possible, la distribution de carburant dans la chambre de combustion, une qualité de carburant et/ou un indice d'air.

**4.** Procédé selon l'une des revendications précédentes, **caractérisé en ce que** pour la détermination du couple maximum dynamique, la grandeur utilisée est la vitesse de rotation du moteur à combustion interne, le remplissage, notamment le remplissage actuel, de la chambre de combustion du moteur à combustion interne, l'angle d'allumage, notamment le plus petit angle d'allumage possible, du dispositif d'allumage du moteur à combustion interne, la quantité de carburant, la quantité d'injection, notamment la quantité d'injection maximale possible, la distribution de carburant dans la chambre de combustion, la qualité de carburant et/ou l'indice d'air.

**5.** Procédé selon l'une des revendications précédentes, **caractérisé en ce qu'**une courbe caractéristique (3) est utilisée, la courbe caractéristique (3) décrivant le couple maximum stationnaire et/ou dynamique au moyen d'au moins une grandeur, notamment de la vitesse de rotation du moteur à combustion interne.

**6.** Procédé selon l'une des revendications précédentes, **caractérisé en ce que** pour l'adaptation, au moins un terme de correction est appliqué au couple maximum initial stationnaire afin d'obtenir le couple maximum résultant stationnaire.

**7.** Procédé selon l'une des revendications précédentes, **caractérisé en ce que** le terme de correction est modifié par une adaptation du terme de correction de telle sorte que le couple maximum résultant stationnaire se rapproche du couple maximum dynamique ou s'aligne sur celui-ci.

**8.** Procédé selon l'une des revendications précédentes, **caractérisé en ce que** l'adaptation du terme de correction est effectuée lorsqu'un fonctionnement du moteur à combustion interne avec remplissage maximum de la chambre de combustion est détecté.

**9.** Procédé selon l'une des revendications précédentes, **caractérisé en ce que** le fonctionnement du moteur à combustion interne avec remplissage maximum est détecté au moyen de la position d'un papillon des gaz du moteur à combustion interne.

**10.** Procédé selon l'une des revendications précédentes, **caractérisé en ce qu'**un temps de retard est attendu en vue de la détection avec certitude du fonctionnement du moteur à combustion interne avec remplissage maximum.

**11.** Procédé selon l'une des revendications précédentes, **caractérisé en ce que** l'adaptation du terme de correction est effectuée lorsque le couple maximum résultant stationnaire déterminé est inférieur au couple maximum dynamique déterminé.

**12.** Procédé selon l'une des revendications précédentes, **caractérisé en ce qu'**il est utilisé avec un dispositif de propulsion hybride.

**13.** Moteur à combustion interne, notamment pour mettre en oeuvre le procédé décrit précédemment, pour lequel sont déterminées une valeur d'un couple maximum stationnaire et une valeur d'un couple maximum dynamique, **caractérisé en ce qu'**il présente un dispositif d'adaptation qui modifie le couple maximum stationnaire déterminé, lequel est un couple maximum initial stationnaire, en un couple maximum résultant stationnaire de telle sorte qu'il est supérieur ou égal au couple maximum dynamique déterminé.

**14.** Dispositif de propulsion hybride d'un véhicule automobile, notamment pour mettre en oeuvre le procédé décrit précédemment, lequel présente au moins deux groupes de propulsion différents, un moteur à combustion interne et notamment une machine électrique, un couple maximum stationnaire et un couple maximum dynamique étant déterminés pour le moteur à combustion interne, **caractérisé en ce qu'**il présente un dispositif d'adaptation qui modifie le couple maximum stationnaire déterminé, lequel est un couple maximum initial stationnaire, en un couple maximum résultant stationnaire de telle sorte qu'il est supérieur ou égal au couple maximum dynamique déterminé.

Fig. 1

EP 2 276 918 B1

Fig. 2

EP 2 276 918 B1

Fig. 3